# EUROPEAN PATENT SPECIFICATION

(11) **EP 1 347 223 B1**
(45) Date of publication and mention of the grant of the patent: **21.04.2004**
(21) Application number: 02027048.4
(22) Date of filing: 03.12.2002
(51) Int. Cl.: F16K 27/04

(54) **Modular cock**
Modularer Hahn
Robinet modulaire

(30) Priority: 27.02.2002 IT TO20020164
(43) Date of publication of application: 24.09.2003
(73) Proprietor: Iurop S.R.L., 20129 Milano (IT)
(72) Inventor: Garrone, Giovanni, Iurop S.r.l., 20143 Milano (IT)
(74) Representative: Garavelli, Paolo

(56) References cited:
- EP-A- 0 077 506
- DE-A- 2 616 898
- DE-B- 1 284 217
- US-A- 3 378 034

## Description

The present invention refers to a modular cock, particularly of the type with mixer, especially, but not in a limiting way, adapted to.be applied on a wall or as resting cock.

Various types of cocks are known in the art, (for example, US-A-3 378 034, DE-A-2 616 898 and DE-A-1 284 217) with several external and internal configurations to deliver the water flow and to mix the water temperature, so that it reaches the final situation desired by a user.

The most recent cocks, of the type with mixer, use, as internal mechanical control member, the so-called "motor" or cartridge, preferably made of ceramic material, whose purpose is changing both the delivered water flow, and the delivered water temperature, with modes and operation known to the skilled people in the art. Such motor is then connected upstream to water supply lines and downstream to different delivery mouths according to applications. Usually the engine is controlled by the user through levers, that are anyway not wholly satisfactory, above all in view of simplifying cock movements and outlines.

In fact, the levers need complex movements for adjustment and are subjected to malfunctions if used in an incorrect way, for example subjecting them to sudden strokes or efforts, and therefore are not suitable for environments in which they are subjected to continuous stresses.

Instead, in traditional cocks driven through knobs, the knobs must be provided as at least two (one for cold water and one for hot water), but have evident problems in that they do not guarantee a continuous temperature variation (if not by opening them both and moving through attempts in order to obtain tepid water) and have sealing problems after a prolonged use; moreover, when they are closed by applying a strong force, they also have opening and operating problems.

Object of the present invention is solving the above prior art problems, by providing a modular cock that allows simplifying cock movements and outlines, with a simple, compact, very sturdy and efficient arrangement, placing all main cock controls inside its body and allowing to obtain coaxial outlets for mixed water with respect to adduction flows, making such cock particularly suitable for wall or resting applications.

A further object of the present invention is providing a cock of the above mentioned type that allows adjusting water temperature and flow with a single combined "elementary" movement of hand and wrist, such movement being spontaneous for a user and not looking like the standard movements for adjusting the mixers but instead looking like a sort of "massage" of the cock itself.

A further object of the present invention is providing a cock of the above-mentioned type that allows water to flow inside the cock body and to go out in any position along such body, independently from the cartridge position inside the body itself: in other words, the inventive cock is realised so that water can be delivered both above and below the cartridge.

The above and other objects and advantages of the invention, as will appear from the following description, are obtained with a modular cock as disclosed in Claim 1. Preferred embodiments and non-trivial variations of the present invention are the subject of the dependent Claims.

The present invention will be better described by some preferred embodiments thereof, given as a non-limiting example, with reference to the enclosed drawings, in which:
- Figure 1 is a side sectional view of an embodiment of the modular cock according to the present invention;
- Figure 2 is an external perspective view of the cock in Fig. 1; and
- Figure 3 is a schematic view of the operating principle of the cock in Fig. 1.

With reference to the Figures, a preferred embodiment of the modular cock 1 of the present invention is shown and described. It will be immediately obvious to the skilled people in the art that numerous variations and modifications (for example related to shape, sizes, various colours and parts with equivalent functionalities) could be made to the described cock without departing from the scope of the invention as claimed in the enclosed Claims.

According to the Figures, the modular cock 1 of the present invention is used for delivering any type of liquids, and substantially comprises:
- a support body 3, preferably made of metallic or ceramic material;
- at least one liquid delivery mouth 5 connected to the support body 3 in a variety of shapes and configurations according to user preferences; and
- at least one motor 7 (or ceramic cartridge) contained inside the support body 3: such motor 7 is adapted to adjust, in a known way, temperature and flow of the liquid to be delivered, through a series of actuating means, only two of which have been schematically shown (designated by reference numbers 13 and 21), which are mutually connected and able to mutually move according to two different degrees of freedom, everything widely known to the skilled people in the art.

The modular cock 1 of the invention has as its main characteristic the fact of further comprising at least one control member 9 of the motor 7, which control member 9 is applied on the external surface of the support body 3 and is adapted to be actuated through the hands of a user. In particular, the control member 9 is adapted to perform a translation movement along the longitudinal direction of the support body 3 to adjust the liquid delivery flow and is adapted to simultaneously perform a rotation movement around the axis of the support body 3 to adjust the temperature of the liquid to be delivered.

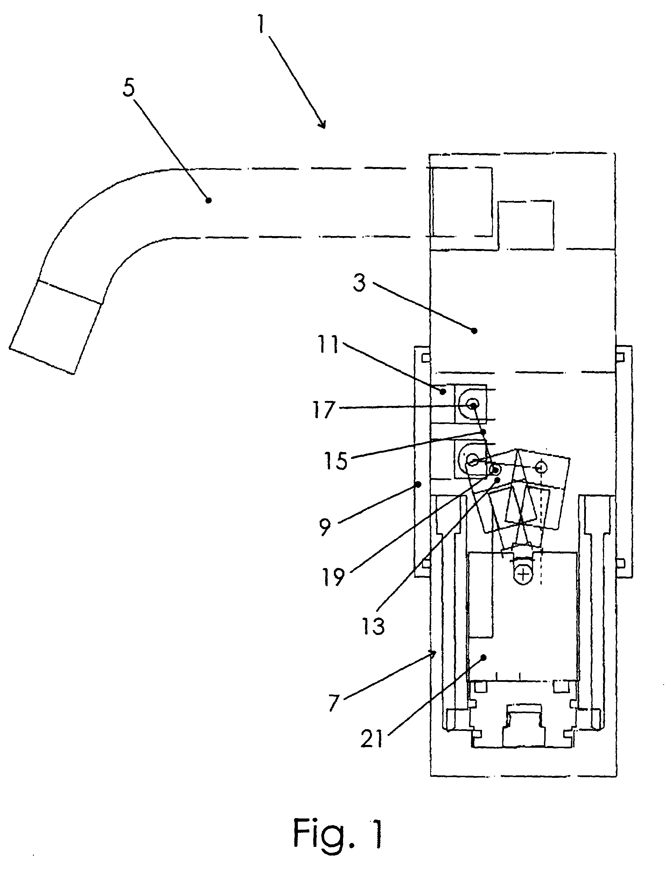

Fig. 1 shows in fact two longitudinal translation positions in which the control member 9 can be located to change the outgoing liquid flow: all adjustment movements of the control member 9 are then easily able to be actuated by the hand and the wrist of a user, with a very immediate and natural movement, that is wound around the support body 3.

The above movements of the modular cock 1 of the invention are very flexible, practically allowing a timely adjustment of flow and temperature; moreover, they can be performed simultaneously or separately, according to user's choices and applications.

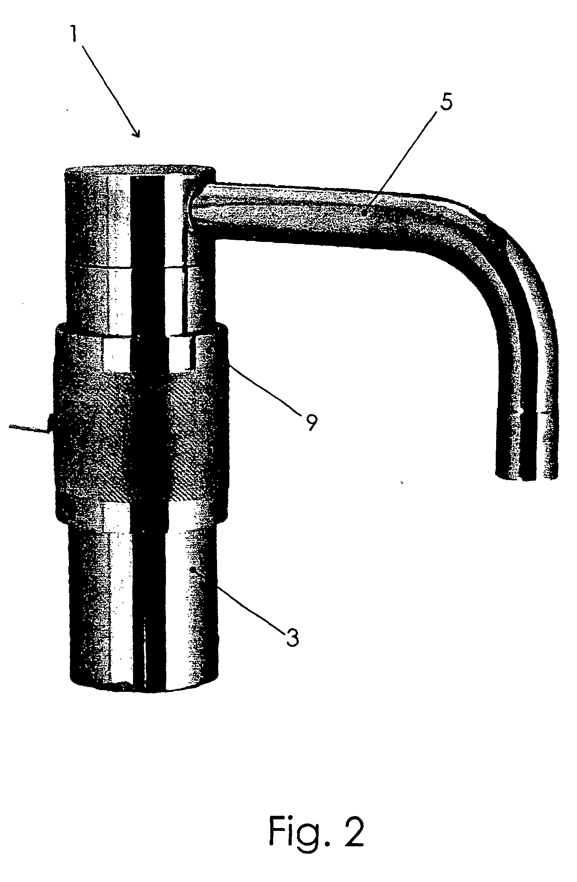

In order to realise the above described movements, the control member 9 comprises connecting means 11, 15 to actuating means 13, 21 of the motor 7: the connecting means 11, 15 are also placed inside the support body 3, in order to make the external shape of the cock 1 compact and slim, as can be better seen in Fig. 2.

In particular, the connecting means 11, 15 are composed of at least one projection 11 hinged (in 17) to an end of at least one small connecting rod 15; the small rod 15 at another end thereof is further hinged (in 19) to actuating means 13, 31 of the motor 7. As already stated, two vertical movement positions of the projection 11 and two corresponding rotary movement positions of the actuating means 13 are shown in Fig. 1.

The Figures show that the support body 3 is of a cylindrical shape and the control member 9 is also of a cylindrical shape and is hollow and annular, and is placed around the cylindrical surface of the support body 3. Other external gemoetric shapes are obviously possible, both of regular and of irregular type, provided that the rotation and translation movements of the control member 9 with respect to the support body 3 are kept unchanged.

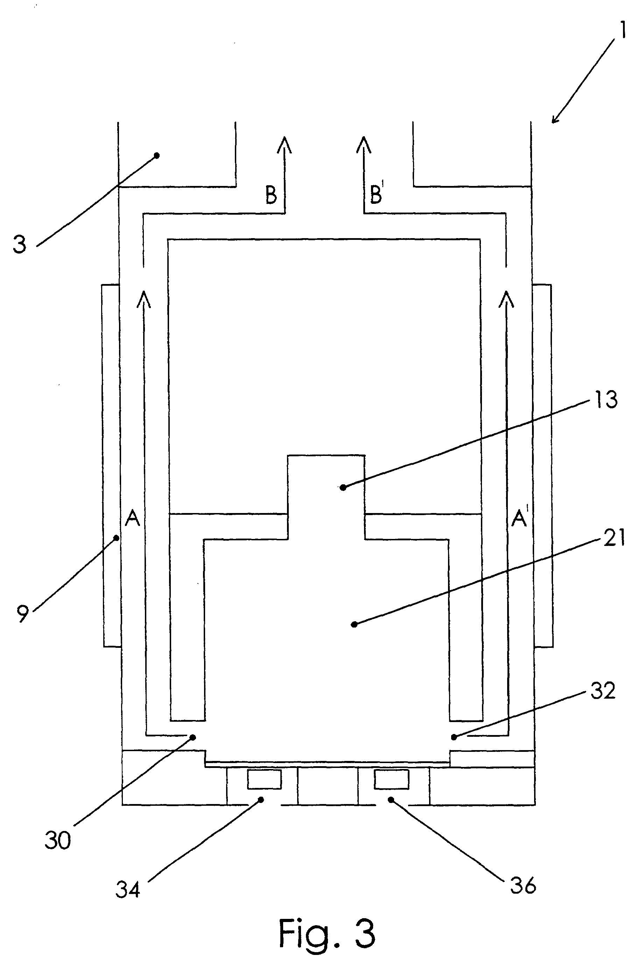

According to a further characteristic of the cock 1 of the invention, that is better shown in Fig.3, the actuating means 21 (shown in Fig. 3 without the connections in Fig. 1 to clarify the drawing) are equipped with openings 30, 32 to make water go out, such openings 30, 32 being obtained in the lower part of the actuating means 21 themselves. The actuating means 21 are placed inside the support body 3 in order to allow the water flow, once having gone out from the actuating means 21, along the directions shown by A, A', B and B' in Fig. 3: it can therefore be seen that water, once being supplied to the cock 1 through the connection of hoses (not shown) to openings 34 and 36, is delivered and goes out from the cock 1 in a vertically upper position with respect to the actuating means 21. Such arrangement, that allows using the inventive control member 9, has never been realised so far in the field of cocks.

It will obviously be possible to provide more traditional arrangements, in which, for example, water can be delivered from a position that is substantially at the same height with respect to the openings 30, 32 or at a lower height with respect to the openings 30, 32.

Some preferred embodiments of the present invention have been previously shown and described: obviously, it will readily occur to the skilled people in the art that numerous variations and modifications, functionally equivalent to the previous ones, can be made and fall within the scope of the invention as pointed out by the enclosed Claims. For example, the cock 1 as shown finds its preferred application as wall cock or resting cock, but obviously it can be used in any other type of cock application where it is desired to deliver liquids and change their flow and temperature.

## Claims

1. Modular cock (1) for delivering liquids, comprising:
- a support body (3) ;
- at least one liquid delivery mouth (5) placed on the upper (figure 1) part of said support body (3); and
- at least one cartridge (7) contained inside said support body (3), said cartridge (7) being adapted to adjust temperature and flow of the liquid to be delivered;
- at least one control member (9) of said motor (7) adapted to be actuated with the hands,
**characterised in that** said control member (9) is provided coaxially along and around part of the external surface of said support body (3) below said liquid delivery mouth (5), said control member (9) being adapted to perform a translation movement along the longitudinal direction of said support body (3) to adjust the liquid delivery flow and being adapted to simultaneously perform a rotation movement around the axis of said support body (3) to adjust the temperature of the liquid to be delivered.

2. Modular cock (1) according to Claim 1, **characterised in that** said translation and rotation movements of said control member (9) are performed simultaneously to simultaneously change flow and temperature of the liquid to be delivered.

3. Modular cock (1) according to Claim 1, **characterised in that** said translation and rotation movements of said control member (9) are performed separately to separately change flow and temperature of the liquid to be delivered.

4. Modular cock (1) according to Claim 1, **characterised in that** said control member (9) comprises connecting means (11, 15) to actuating means (13, 21) of said cartridge (7), said connecting means (11, 15) being placed inside said support body (3).

5. Modular cock (1) according to Claim 4, **characterised in that** said connecting means (11, 15) are composed of at least one projection (11) hinged (in 17) to an end of at least one small connecting rod (15), said small rod (15) at another end thereof being further hinged (in 19) to actuating means (13, 31) of said cartridge (7).

6. Modular cock (1) according to Claim 1, **characterised in that** said support body (3) is of a cylindrical shape and said control member (9) is of an hollow annular cylindrical shape and is placed around the cylindrical surface of said support body (3).

7. Modular cock (1) according to Claim 1, **characterised in that** said cock (1) is adapted to be applied to walls.

8. Modular cock (1) according to Claim 1, **characterised in that** said actuating means (21) are equipped with at least one opening (30, 32) to make water go out therefrom, said at least one opening (30, 32) being obtained in the lower part of said actuating means (21), said actuating means (21) being placed inside said support body (3) in order to allow water to flow, once having gone out of the actuating means (21), along a direction that allows delivering water from said cock (1) in a vertically upper position with respect to said actuating means (21).

9. Modular cock (1) according to Claim 1, **characterised in that** said actuating means (21) are equipped with at least one opening (30, 32) to make water go out therefrom, said at least one opening (30, 32) being obtained in the lower part of said actuating means (21), said actuating means (21) being placed inside said support body (3) in order to allow water to flow, once having gone out of the actuating means (21), along a direction that allows delivering water from said cock (1) in a position that is vertically at the same height with respect to said actuating means (21).

10. Modular cock (1) according to Claim 1, **characterised in that** said actuating means (21) are equipped with at least one opening (30, 32) to make water go out therefrom, said at least one opening (30, 32) being obtained in the lower part of said actuating means (21), said actuating means (21) being placed inside said support body (3) in order to allow water to flow, once having gone out of the actuating means (21), along a direction that allows delivering water from said cock (1) in a vertically lower position with respect to said actuating means (21).

11. Modular cock (1) according to any one of Claims 8, 9 or 10, **characterised in that** said openings (30, 32) are two.

## Patentansprüche

1. Modularer Hahn (1) für die Abgabe von Flüssigkeiten, bestehend aus:
- einem Körper (3);
- wenigstens einer Abgabeöffnung (5) für die Flüssigkeit, die sich im oberen Teil (Abbildung 1) des betreffenden Körpers (3) befindet; und
- wenigstens einer Kartusche (7) im Inneren des Körpers (3), wobei diese Kartusche (7) die Temperatur und den Fluss der abzugebenden Flüssigkeit reguliert;
- wenigstens ein Steuerelement (9) für die Kartusche (7) für manuelle Bedienung,
**gekennzeichnet durch** die Tatsache, dass das besagte Steuerelement (9) koaxial längs und um einen Teil der Außenfläche des besagten Körpers (3) unter der Flüssigkeitsabflussöffnung (5) vorgesehen ist. Das besagte Steuerelement (9) führt eine Verlagerungsbewegung in Längsrichtung des besagten Körpers (3) zur Regulierung des Flusses der Flüssigkeitsabgabe aus und gleichzeitig eine Drehbewegung um die Achse des besagten Körpers (3) für die Regulierung der Temperatur der abgegebenen Flüssigkeit.

2. Modularer Hahn (1) gemäß Beanspruchung 1, **gekennzeichnet durch** die Tatsache, dass die besagten Verlagerungs- und Drehbewegungen des besagten Steuerelements (9) gleichzeitig für gleichzeitige Veränderung von Fluss und Temperatur der abzugebenden Flüssigkeit ausgeführt werden.

3. Modularer Hahn (1) gemäß Beanspruchung 1, **gekennzeichnet durch** die Tatsache, dass die besagten Verlagerungs- und Drehbewegungen der besagten Steuerelemente (9) getrennt für die getrennte Veränderung von Fluss und Temperatur der abzugebenden Flüssigkeit ausgeführt werden.

4. Modularer Hahn (1) gemäß Beanspruchung 1, **gekennzeichnet durch** die Tatsache, dass das besagte Steuerelement (9) Elemente (11, 15) für die Verbindung mit den Betätigungselementen (13, 21) der besagten Kartusche (7) vorsieht, wobei sich die besagten Verbindungselemente (11, 15) im Inneren des besagten Körpers (3) befinden.

5. Modularer Hahn (1) gemäß Beanspruchung 4, **gekennzeichnet durch** die Tatsache, dass die besagten Verbindungselemente (11, 15) aus wenigstens einer Protuberanz (11) bestehen, die **durch** Gelenk (in 17) mit dem Endstück wenigstens eines Verbindungsstabes (15) verbunden sind, wobei der Stab (15) am anderen Endstück weiterhin **durch** Gelenk (in 19) mit den Bedienungselementen (13, 21) der besagten Kartusche (7) verbunden sind.

6. Modularer Hahn (1) gemäß Beanspruchung 1, **gekennzeichnet durch** die Tatsache, dass der besagte Körper (3) die Form eines Zylinders hat und dass das besagte Steuerelement (9) zylinderförmig und ringförmig hohl ist und auf die zylindrische Oberfläche des besagten Körpers (3) aufgezogen ist.

7. Modularer Hahn (1) gemäß Beanspruchung 1, **gekennzeichnet durch** die Tatsache, dass der besagte Hahn (1) an der Wand angebracht wird.

8. Modularer Hahn (1) gemäß Beanspruchung 1, **gekennzeichnet durch** die Tatsache, dass die besagten Bedienungselemente (21) mit wenigstens einer Öffnung (30, 32) für den Austritt des Wassers versehen sind, wobei die besagte Öffnung (30, 32) sich im unteren Teil der Bedienungselemente (21) befindet. Die besagten Bedienungselemente (21) befinden sich im Inneren des besagten Körpers (3) mit dem Zweck, den Fluss des Wassers nach Austritt aus den Bedienungselementen (21) in einer Richtung zu ermöglichen, welche die Abgabe des Wassers aus diesem Hahn (1) in einer vertikalen Position oberhalb der besagten Bedienungselemente (21) ermöglicht.

9. Modularer Hahn (1) gemäß Beanspruchung 1, **gekennzeichnet durch** die Tatsache, dass die besagten Bedienungselemente (21) mit wenigstens einer Öffnung (30, 32) für den Austritt des Wassers versehen sind, wobei die besagte, wenigstens eine Öffnung (30, 32) sich im unteren Teil der besagten Bedienungselemente (21) befindet. Die besagten Bedienungselemente (21) befinden sich im Inneren des besagten Körpers (3) mit dem Zweck, den Fluss des Wassers nach Austritt aus den Bedienungselementen (21) in einer Richtung zu ermöglichen, welche die Abgabe des Wassers aus diesem Hahn (1) in einer vertikalen Position auf gleicher Höhe der besagten Bedienungselemente (21) ermöglicht.

10. Modularer Hahn (1) gemäß Beanspruchung 1, **gekennzeichnet durch** die Tatsache, dass die besagten Bedienungselemente (21) mit wenigstens einer Öffnung (30, 32) für den Austritt des Wassers versehen sind, wobei die besagte, wenigstens eine Öffnung (30, 32) sich im unteren Teil der besagten Bedienungselemente (21) befindet. Die besagten Bedienungselemente (21) befinden sich im Inneren des besagten Körpers (3) mit dem Zweck, den Fluss des Wassers nach Austritt aus den Bedienungselementen (21) in einer Richtung zu ermöglichen, welche die Abgabe des Wassers aus diesem Hahn (1) in einer vertikalen Position unterhalb der besagten Bedienungselemente (21) ermöglicht

11. Modularer Hahn (1) gemäß einer der Beanspruchungen 8, 9 oder 10, **gekennzeichnet durch** die Tatsache, dass zwei Öffnungen (30, 32) vorhanden sind.

## Revendications

1. Robinet modulaire (1) pour le débit de liquides, comprenant:
- un corps de support (3);
- au moins une bouche de débit (5) du liquide placée sur la parte supérieure (figure 1) dudit corps de support (3); et
- au moins une cartouche (7) contenue à l'intérieur dudit corps de support (3), ladite cartouche (7) étant apte à réguler la température et le flux du liquide à débiter;
- au moins un élément de commande (9) de ladite cartouche (7) apte à être actionné par les mains,
**caractérisé par le fait que** ledit élément de commande (9) est prévu en mode coaxial le long et autour de la partie de la surface externe dudit corps de support (3) au-dessous de ladite bouche de débit de liquide (5), ledit élément de commande (9) étant apte à exécuter un mouvement de translation le long de la direction longitudinale dudit corps de support (3) pour réguler le flux de débit du liquide et étant apte à exécuter simultanément un mouvement de rotation autour de l'axe dudit corps de support (3) pour réguler la température du liquide à débiter.

2. Robinet modulaire (1) selon la revendication 1, **caractérisé par le fait que** lesdits mouvements de translation et rotation dudit élément de commande (9) sont effectués simultanément pour varier simultanément flux et température du liquide à débiter.

3. Robinet modulaire (1) selon la revendication 1, **caractérisé par le fait que** lesdits mouvements de translation et de rotation dudit élément de commande (9) sont effectués séparément pour varier séparément flux et température du liquide à débiter.

4. Robinet modulaire (1) selon la revendication 1, **caractérisé par le fait que** ledit élément de commande (9) comprend des moyens (11, 15) de connexion à des moyens d'actionnement (13, 21) de ladite cartouche (7), les dits moyens de connexion (11, 15) étant placés à l'intérieur dudit corps de support (3).

5. Robinet modulaire (1) selon la revendication 4, **caractérisé par le fait que** lesdits moyens de connexion (11, 15) sont constitués par au moins une protubérance (11) fixée à l'aide de charnière (en 17) à une extrémité d'au moins une petite tige (15) de connexion, la dite tige (15) étant en outre fixée à l'aide de charnière à l'autre extrémité (en 19) aux moyens d'actionnement (13, 21) de ladite cartouche (7).

6. Robinet modulaire (1) selon la revendication 1, **caractérisé par le fait que** ledit corps de support (3) est de forme cylindrique et ledit élément de commande (9) est de forme cylindrique creuse annulaire et est chaussé autour de la surface cylindrique dudit corps de support (3).

7. Robinet modulaire (1) selon la revendication 1, **caractérisé par le fait que** ledit robinet (1) est apte à être appliqué sur murs.

8. Robinet modulaire (1) selon la revendication 1, **caractérisé par le fait que** lesdits moyens d'actionnement (21) sont dotés d'au moins une ouverture (30, 32) pour faire sortir l'eau de celle-ci, ladite au moins une ouverture (30, 32) étant obtenue dans la partie inférieure desdits moyens d'actionnement (21), les dits moyens d'actionnement (21) étant placés à l'intérieur dudit corps de support (3) dans le but de permettre le flux de l'eau, une fois sortie des moyens d'actionnement (21), le long d'une direction qui permet le débit de l'eau dudit robinet (1) dans une position verticalement supérieure par rapport aux dits moyens d'actionnement (21).

9. Robinet modulaire (1) selon la revendication 1, **caractérisé par le fait que** lesdits moyens d'actionnement (21) sont dotés d'au moins une ouverture (30, 32) pour faire sortir l'eau de celle-ci, ladite au moins une ouverture (30, 32) étant obtenue dans la partie inférieure des dits moyens d'actionnement (21), les dits moyens d'actionnement (21) étant placés à l'intérieur dudit corps de support (3) dans le but de permettre le flux de l'eau, une fois sortie des moyens d'actionnement (21), le long d'une direction qui permet le débit de l'eau dudit robinet (1) dans une position qui est verticalement à la même hauteur par rapport aux dits moyens d'actionnement (21).

10. Robinet modulaire (1) selon la revendication 1, **caractérisé par le fait que** lesdits moyens d'actionnement (21) sont dotés d'au moins une ouverture (30, 32) pour faire sortir l'eau de celle-ci, ladite au moins une ouverture (30, 32) étant obtenue dans la partie inférieure des dits moyens d'actionnement (21), les dits moyens d'actionnement (21) étant placés à l'intérieur dudit corps de support (3) dans le but de permettre le flux de l'eau, une fois sortie des moyens d'actionnement (21), le long d'une direction qui permet le débit de l'eau dudit robinet (1) dans une position verticalement inférieure par rapport aux dits moyens d'actionnement (21).

11. Robinet modulaire (1) selon une des revendications 8, 9 ou 10, **caractérisé par le fait que** lesdites ouvertures (30, 32) sont au nombre de deux.
